# EUROPÄISCHE PATENTSCHRIFT

(11) **EP 0 831 216 B1**
(45) Veröffentlichungstag und Bekanntmachung des Hinweises auf die Patenterteilung: **12.06.2002**
(21) Anmeldenummer: 97115329.1
(22) Anmeldetag: 04.09.1997
(51) Int. Cl.: F02D 9/06

(54) **Verfahren zum Betreiben einer Motorbremse und Vorrichtung zur Durchführung des Verfahrens**
Method for operating an engine brake and device for carrying out the method
Procédé pour opérer un frein moteur et dispositif pour la mise en oeuvre du procédé

(30) Priorität: 18.09.1996 DE 19637999
(43) Veröffentlichungstag der Anmeldung: 25.03.1998
(73) Patentinhaber: DaimlerChrysler AG, 70567 Stuttgart (DE)
(72) Erfinder: Schmidt, Erwin, 73666 Baltmannsweiler (DE); Sumser, Siegfried, 70184 Stuttgart (DE)

(56) Entgegenhaltungen:
- EP-A- 0 292 010
- DE-A- 3 935 367
- US-A- 5 410 882

## Beschreibung

Die Erfindung betrifft ein Verfahren zum Betreiben einer Motorbremse und eine Vorrichtung zur Durchführung des Verfahrens gemäß dem Oberbegriff der unabhängigen Ansprüche 1 und 9.

Aus der DE 39 35 367 A1 ist bereits ein gattungsgemäßes Verfahren zum Betreiben einer Motorbremse für eine aufgeladene Brennkraftmaschine zum Antrieb eines Kraftfahrzeuges bekannt. Bei diesem Verfahren wird im Motorbremsbetrieb verdichtetes Arbeitsgas vor Beendigung des Expansionstaktes mindestens teilweise den Arbeitsräumen der Brennkraftmaschine über ein Drosselventil entzogen, wobei eine Abgasleitung zur Atmosphäre hin verschlossen wird und das gesamte die Arbeitsräume in allen Arbeitstakten verlassende Arbeitsgas in einem geschlossenen Kreislauf mit entsprechend erhöhtem Druck zur erneuten Ansaugung zurückgeführt wird. Des weiteren besitzt der Abgasturbolader der Brennkraftmaschine zur Erreichung eines möglichst hohen Ladedruckes im Motorbremsbetrieb eine variable Turbinengeometrie.

Zum allgemeinen technischen Hintergrund wird noch auf die Druckschriften DE 44 25 956 A1, US 5 091 857, US 5 193 657 und JP 1-60727, (A) verwiesen.

Der Erfindung liegt die Aufgabe zugrunde, ein Verfahren zum Betreiben einer Motorbremse und eine Vorrichtung zur Durchführung des Verfahrens derart auszubilden, daß eine Motorbremse mit breiterem Einsatzspektrum darstellbar sowie eine wesentliche Reduzierung der Abnutzung der mechanischen Radbremse erreichbar ist.

Die Aufgabe wird erfindungsgemäß durch die im Kennzeichen der unabhängigen Ansprüche 1 und 9 angegebenen Merkmale gelöst. Die Merkmale der Unteransprüche geben vorteilhafte Aus- und Weiterbildungen der Erfindung an.

Ein Vorteil des erfindungsgemäßen Verfahrens liegt darin, daß durch die in Abhängigkeit von Betriebsparametern der Brennkraftmaschine im Ventilquerschnitt variabel geregelten Drosselventile (Auslaßventile und/oder Dekompressionsventile) bei entsprechender Motordrehzahl eine gezielte Verteilung der Gesamtbremsleistung zwischen Motorbremsleistung und mechanischer Radbremsleistung innerhalb einer bestimmten Bandbreite ermöglicht wird. Ein weiterer Vorteil besteht in der Möglichkeit einer Temperaturentlastung des Austrittstraktes, indem der Fahrer durch eine entsprechende Bremsleistungsanforderung die variable Motorbremse benutzt. Ein weiterer Vorteil besteht in der Möglichkeit der Taktung der Ventilöffnung auf den oberen Totpunkt des Kompressionstaktes, wodurch eine Steigerung der Motorbremsleistung erzielbar ist.

Des weiteren wird durch den variabel einstellbaren Drosselventilquerschnitt die Luftmasse im Zylinder der Brennkraftmaschine bestimmt, die den Expansionstakt mit durchläuft. Da das Verhältnis zwischen der Luftmasse, die über die Austrittsventile schon vor dem oberen Totpunkt am Ende des Kompressionstaktes den Zylinder verläßt und der Luftmasse, die im nachfolgenden Expansionstakt im Zylinder verbleibt, das Bremsleistungsniveau bestimmt, wird dieses über den variablen Drosselventilquerschnitt direkt mitbestimmt.

Durch die hohe Aufladung im Motorbremsbetrieb befindet sich die Laderdrehzahl auf hohem Niveau, wodurch direkt nach dem Bremsvorgang eine hohe Luftmenge für den befeuerten Betrieb der Brennkraftmaschine zur Verfügung steht und somit das Rauchproblem auch bei den hohen Einspritzmengen während der Beschleunigungsphase nicht besteht.

Durch die erfindungsgemäße Ausgestaltung nach Anspruch 2 wird ermöglicht, daß für maximale Motorbremsleistung die Werte für den Hub des Drosselventils und die Werte für den Einströmquerschnitt der Abgasturbine in Abhängigkeit von bestimmten Betriebsparametern der Brennkraftmaschine wie beispielsweise Drehzahl, Turbineneintrittsdruck, Ladeluftdruck und Umgebungstemperatur in einem elektronischen Kennfeld abgelegt sind, sodaß diese Werte in Abhängigkeit von aktuell gemessenen Betriebsparametern der Brennkraftmaschine zur Regelung der Motorbremse aus dem Kennfeld ausgelesen werden können.

Die Ausgestaltung des erfindungsgemäßen Verfahrens nach Anspruch 3 wird bevorzugt verwendet, da der Fahrer im normalen Fahrbetrieb die Bremsleistungsanforderung üblicherweise über die Betätigung des Bremspedals für die mechanische Radbremse abgibt. Dabei kann von dem Sensor, der die Bremsleistungsanforderung detektiert, auch eine Intensität (Betätigungsgeschwindigkeit) bei der Betätigung der mechanischen Radbremse bewertet werden, um eventuell sofort eine erhöhte Motorbremsleistung bereitzustellen.

Ein Vorteil der Ausgestaltung der Erfindung nach Anspruch 4 ist ein Sicherheitsgewinn, da durch das Auslösen der Handbremse während der Fahrt die mit den aktuellen Betriebsparametern der Brennkraftmaschine maximal mögliche Motorbremswirkung aktivierbar ist. Zudem wird durch einen Notknopf eine weitere Redundanz für die Aktivierung der Motorbremse erreicht.

Durch die erfindungsgemäße Ausgestaltung nach Anspruch 5 wird im Falle zu großer Abweichungen der Istwerte von den Sollwerten auf Fehler erkannt und der Fahrer über eine optische Anzeige und/oder ein akustisches Signal darauf hingewiesen, daß ein Fehler im Motorbremssystem vorliegt und ein Werkstattbesuch erfolgen soll. Der Rechner des Motorbremssystems protokolliert diesen Zustand. Erst in der Werkstatt können diese Daten gelöscht oder durch Notizen der durchgeführten Reparatur erweitert werden.

Eine wesentliche Reduzierung der Abnutzung der mechanischen Radbremsen wird durch die erfindungsgemäße Ausgestaltung nach Anspruch 6 erreicht, indem weitgehend unabhängig von der Häufigkeit und Intensität der Betätigung der mechanischen Radbremse durch den Fahrer die Gesamtbremsleistung überwiegend von der Motorbremse übernommen wird.

Die erfindungsgemäße Ausgestaltung nach Anspruch 7 dient der Schonung der Ventile, indem eine Minimierung der Austrittstemperaturbelastung erreicht wird. Auch kann durch phasenweises Schließen des Drosselventils eine Zwischenkühlung des Auslaßtraktes bei relativ hoher Motorbremsleistung erreicht werden.

Durch die Ausgestaltung des erfindungsgemäßen Verfahrens nach Anspruch 8 ist die Austrittstemperaturbelastung weiter verringerbar, falls die herrschenden Drehzahlverhältnisse ein Zurückschalten auf eine niedrigere Gangstufe ermöglichen.

Die Vorrichtung nach den Ansprüchen 9 und 10 stellt eine bevorzugte Bauausführung der Erfindung dar.

Weitere Vorteile der Erfindung gehen aus der Beschreibung hervor.

In den Zeichnungen ist die Erfindung anhand eines Ausführungsbeispiels näher erläutert. Es zeigen:

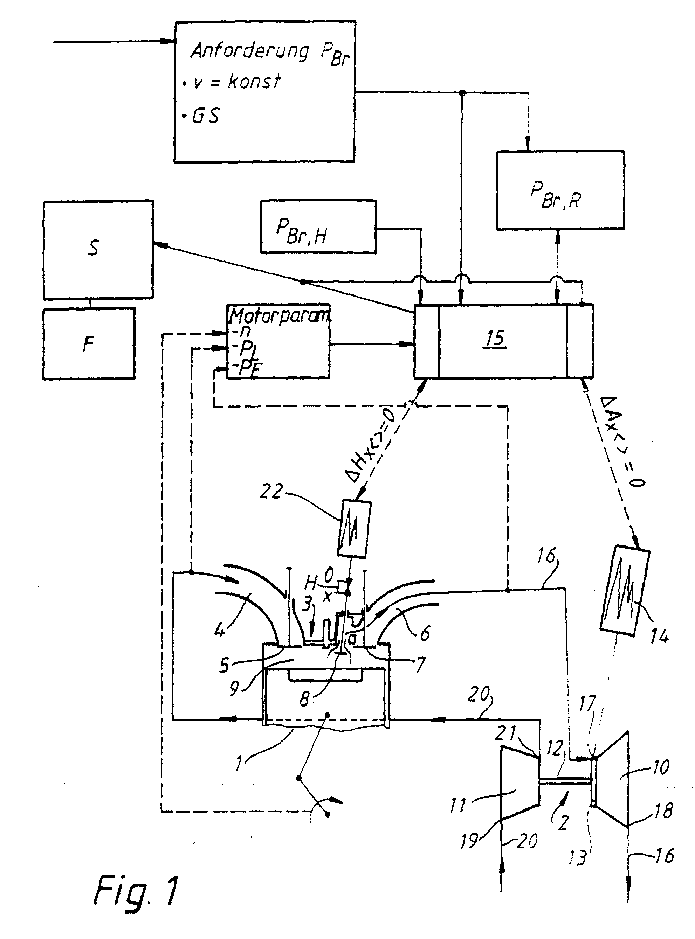

- Fig. 1: eine Schemazeichnung einer erfindungsgemäßen Motorbremsvorrichtung mit einem Zylinder einer mehrzylindrigen Brennkraftmaschine und einem Abgasturbolader, dessen Abgasturbine nebst variablem Leitgitter mit einer Auslaßseite und dessen Ladeluftverdichter mit einer Einlaßseite der Brennkraftmaschine verbunden ist, wobei in dem Zylinder ein Drosselventil angeordnet ist und wobei das Drosselventil und das variable Leitgitter über einen Regler nebst Steller regelbar sind und der Regler Eingangssignale von Betriebsparametern der Brennkraftmaschine und von der Fahrgeschwindigkeit erhält und

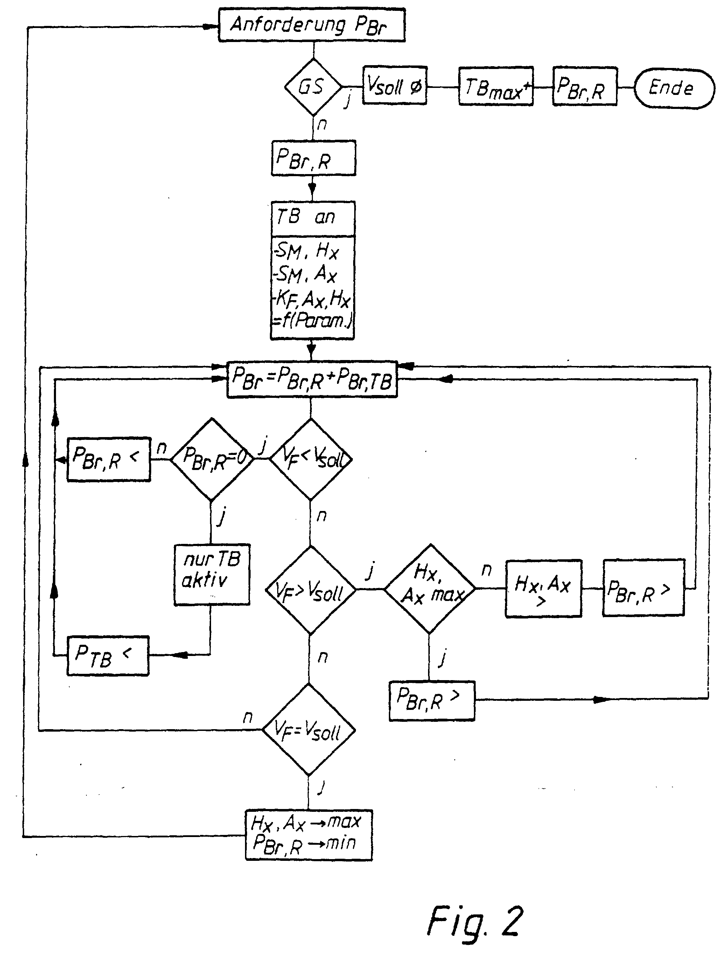

- Fig. 2: ein Ablaufschema eines erfindungsgemäßen Motorbremsverfahrens.

Fig. 1 zeigt eine Schemazeichnung einer erfindungsgemäßen Motorbremsvorrichtung für eine mehrzylindrige aufgeladene Brennkraftmaschine zum Antrieb eines Kraftfahrzeuges. Von der Brennkraftmaschine ist lediglich ein Zylinder 1 dargestellt, der mit einem Abgasturbolader 2 verbunden ist. Im Zylinderkopf 3 des Zylinders 1 befindet sich ein Einlaßkanal 4 nebst Einlaßventil 5 und ein Auslaßkanal 6 nebst Auslaßventil 7. Zwischen Einlaßkanal 4 und Auslaßkanal 6 ist ein Drosselventil 8 (Dekompressionsventil) angeordnet, bei dessen Öffnung ein Arbeitsraum 9 des Zylinders 1 mit dem Auslaßkanal 6 strömungsmäßig verbunden ist. Ein Hub Hₓ des Drosselventils 8 ist über den Regler 15 nebst Steller 22 inkremental verstellbar, wobei besagter Regler 15 Betriebsparameter der Brennkraftmaschine und Bremsleistungsanforderungen des Fahrers repräsentierende Eingangssignale erhält und in Signale für den Hub Hₓ des Drosselventils 8 verarbeitet.

Im Motorbremsbetrieb wird verdichtetes Arbeitsgas vor Beendigung des Expansionstaktes des Zylinders 1 dem Arbeitsraum 9 über das geöffnete Drosselventil 8 entzogen.

Der Abgasturbolader 2 umfaßt eine Abgasturbine 10 urd einen Ladeluftverdichter 11, die beiden mit einer Welle 12 drehfest verbunden sind. Die Abgasturbine 10 besitzt in prinzipiell bekannter Weise ein variables Leitgitter 13, mit dem der Einlaßquerschnitt für das auf das Laufrad der Abgasturbine 10 strömende Abgas regelbar ist. Die Verstellung des Einlaßquerschnittes Aₓ des variablen Leitgitters 13 erfolgt über einen Steller 14, der ebenfalls vom Regler 15 angesteuert wird.

Der Auslaßkanal 6 ist über eine Abgasleitung 16 mit einem Einlaßstutzen 17 der Abgasturbine 10 verbunden, dessen Auslaßstutzen 18 zu einer nicht näher dargestellten Auspuffleitung führt. Eine Saugseite 19 des Ladeluftverdichters 11 ist mit einer Ladeluftleitung 20 verbunden. Von einer Druckseite 21 Ladeluftverdichters 11 führt die Ladeluftleitung 20 zum Einlaßkanal 4.

Der Regler 15 regelt in Abhängigkeit von den eingehenden Signalen der Betriebsparameter der Brennkraftmaschine (Drehzahl n, Ladedruck p_{L}, Turbineneintrittsdruck p_{E}), in Abhängigkeit der Bremsleistungsanforderung p_{Br} der mechanischen Radbremse p_{Br,R} bzw. der Handbremse p_{Br, H} und weiteren Eingangssignalen (Gefahrensituation GS, Fahrgeschwindigkeit v_{F}) die Motorbremse nach dem unten beschriebenen erfindungsgemäßen Verfahren. Bei erfolgter Sicherheitsüberprüfung S hinsichtlich der Motorbremswirkung des Ventilhubes Hₓ und der Verstellung des Einlaßquerschnittes Aₓ bei bekannten Istwerten im Verhältnis zu vorbekannten Sollwerten erfolgt eine Ausgabe eines Fehlersignals F, das dem Fahrer eine mangelhafte Funktion der Motorbremsvorrichtung anzeigt.

Zusätzlich kann das variable Leitgitter 13 der Abgasturbine 10 des Abgasturboladers 2 über einen Regler 15 nebst Steller 14 in seinem Durchströmquerschnitt und/oder seinem Drall inkremental verstellbar ist, wobei besagter Regler 15 Betriebsparameter der Brennkraftmaschine und Bremsleistungsanforderungen des Fahrers repräsentierende Eingangssignale erhält und in Signale für die Verstellung des Leitgitters 13 verarbeitet.

Im folgenden wird das erfindungsgemäße Verfahren zum Betreiben einer Motorbremse anhand des Ablaufschemas von Fig. 2 beschrieben. Am Beginn des Verfahrens steht eine Anforderung von Bremsleistung, die üblicherweise vom Fahrer über die Betätigung des Bremspedals der mechanischen Radbremse beispielsweise bei Konstanthaltung der Fahrgeschwindigkeit bei Bergabfahrten oder bei Verkehrsflußanpassungen erfolgt. Die Bremsleistungsanforderung wird jedoch auch über einen Brsmsknopf, einen Notbremsknopf oder über die Handbremse erkannt.

Zunächst wird überprüft, ob eine Gefahrensituation GS erkannt wird. Dies ist dann der Fall, wenn entweder das Signal der Bremsleistungsanforderung bei einer Fahrgeschwindigkeit v_{F} > 0 ein Signal eines Notbremsknopfes oder der Handbremse ist oder wenn die Betätigungsgeschwindigkeit des Bremspedals einen vorbestimmten Wert (Panik-Wert) überschreitet. Wenn auf GS erkannt wurde, ist die Vorgabe der Soll-Geschwindigkeit vₛₒₗₗ = 0. Der Regler 15 regelt die bei den aktuellen Betriebsparametern der Brennkraftmaschine maximal mögliche Motorbremsleistung ein, indem der Hub Hₓ des Drosselventils 8 gegen Ende des Kompressionstaktes bis zum Ende des Expansionstaktes maximal geöffnet ist, während das Drosselventil 8 im Einlaßtakt geschlossen bleibt. Der Einströmguerschnitt Aₓ des Leitgitters wird entsprechend dem Abgasmassenstrom zur Erreichung einer höheren Turbineneintrittsgeschwindigkeit des Abgases verringert. Eine weitere Option bei erkannter Gefahrensituation liegt in einer gesteuerten sehr frühen Kraftstoffeinspritzung im Kompressionstakt weit vor Erreichen des OT, wodurch die Motorbremsleistung weiter gesteigert wird.

Falls keine Gefahrensituation erkannt wurde, liegt normales Bremsen mit der mechanischen Radbremse vor oder es wird der Motorbremsknopf betätigt. Falls letzteres der Fall ist, erfolgt einfach eine direkte Bremsung mit der Motorbremse, wobei die aufgrund der Betriebsparameter der Brennkraftmaschine maximal mögliche Motorbremsleistung angefahren wird. Bei Bremsung mit der mechanischen Radbremse durch den Pedaldruck des Fahrers springt die Motorbremse selbsttätig an, das heißt die elektronischen Kennfelder für die Drosselventilhübe Hₓ und ggf. den Einlaßquerschnitt Aₓ des variablen Leitgitters 13 in Abhängigkeit von den geltenden Betriebsparametern der Brennkraftmaschine werden ausgelesen. Anschließend öffnet der Stellmotor 22 das Drosselventil 8 um den ausgelesenen Wert H_{x,mx}. Der Stellmotor 14 schließt das variable Leitgitter 13 um einen Wert A_{x.mx}. Der Index mx stellt die Abhängigkeit der Werte von Hₓ und Aₓ von den Betriebsparametern der Brennkraftmaschine dar.

Die Verstellung des Einlaßquerschnittes Aₓ ist optional. Für die Funktion der Erfindung genügt bereits eine Regelung des Drosselventilhubes Hₓ.

Über den Regler 15 (siehe Fig. 1) wird bei einem Signal einer Bremsleistungsanforderung des Fahrers die benötigte Bremsleistung zumindest vorzugsweise über die Motorbremse aufgebracht. so wird in gleicher Weise wie die Motorbremsleistung aufgebaut wird, die Leistung der mechanischen Radbremse reduziert, sodaß sich die für den Fahrer wahrgenommene Bremsleistung nicht ändert.

Wenn der vom Fahrer gewünschte Geschwindigkeitswert vₛₒₗₗ für die Fahrgeschwindigkeit v_{F} bereits unterschritten wurde, wird dieser die mechanische Radbremse entsprechend lösen. Dementsprechend erfolgt auch eine Reduzierung der Motorbremswirkung.

Solange die gewünschte Geschwindigkeitswert vₛₒₗₗ für die Fahrgeschwindigkeit v_{F} noch nicht erreicht ist, wird der Fahrer die me-chanische Bremsleistung erhöhen. Falls noch nicht die maximal möglichen Motorbremswerte vorliegen, erfolgt eine Regelung von H_{x,mx} und ggf. A_{x,mx} in Richtung höherer Motorbremswerte. Erst wenn die bei den aktuellen Betriebsparametern der Brennkraftmaschine maximal möglichen Motorbremswerte erreicht sind und eine weitere Bremsleistungsforderung des Fahrers erkannt wird, wird eine entsprechende Erhöhung der mechanischen Radbremsleistung zugelassen.

Bei einer gewollten Verringerung der Bremsleistung geht der Fahrer entsprechend vom Bremspedal, wodurch erkannt wird, daß die Fahrgeschwindigkeit kleiner als die Sollgeschwindigkeit ist und Motorbremswirkung wird reduziert.

Für maximale Motorbremsleistung sind die Werte für den Hub H_{x,mx} des Drosselventils und/oder die Werte für den Einströmquerschnitt A_{x,mx} in Abhängigkeit von vorgegebenen Betriebsparametern der Brennkraftmaschine in einem elektronischen Kennfeld abgelegt. Diese Werte können in Abhängigkeit von aktuell gemessenen Betriebsparametern ausgelesen werden.

Vorzugsweise wird die Motorbremsleistung derart geregelt, daß bei einer geforderten Gesamtbremsleistung die über die Motorbremse abgegebene Bremsleistung im wesentlichen der Gesamtbremsleistung entspricht und über die mechanischen Radbremsen keine oder nur eine geringe Bremsleistung abgegeben wird. Die Regelung (Regler 15) verstellt dabei die Größen Hₓ und ggf. Aₓ so, daß sich ein Minimum an Leistungsforderung an der mechanischen Radbremse ergibt.

In einer weiteren Ausführung der Erfindung sind die Sollwerte des Drosselventilhubs H_{x,mx} und des Einströmquerschnitts A_{x,mx} der Abgasturbine sowie die aus diesen Sollwerten resultierenden Motorbremswerte für vorgegebene Betriebsparameter der Brennkraftmaschine und Fahrgeschwindigkeiten (Testpunkte) in einem Kennfeld abgelegt. Diese Sollwerte werden mit den im tatsächlichen Motorbremsbetrieb auftretenden Istwerten des Drosselventilhubs Hₓ und des Einströmquerschnitts Aₓ verglichen. Bei einer vorgegebenen Abweichung der Istwerte von den Sollwerten wird ein Fehlersignal, das dem Fahrer eine Fehlfunktion der Motorbremse signalisiert, ausgegeben.

Zur Erreichung eines verhältnismäßig niederen Temperaturniveaus im Auslaßtrakt kann durch Betätigung eines Motorbremsknopfes oder bei Erreichen einer vorgegebenen Temperatur im Abgastrakt das Drosselventil lediglich für kleine Hübe oder Nullhübe angesteuert werden, während das variable Leitgitter für maximale Turbinenleistung angesteuert wird. Die Absenkung des Temperaturniveaus erfolgt in erster Linie durch den erhöhten Anteil an frischer vorkomprimierter Ladeluft, die durch die Erhöhung der Turbinenleistung nunmehr über den Ladeluftverdichter gefördert wird. Unterstützt wird die Absenkung des Temperaturniveaus noch weiter, indem die Motordrehzahl n - sofern möglich -, beispielsweise durch Anwahl einer niedrigeren Gangstufe erhöht wird.

## Patentansprüche

1. Verfahren zum Betreiben einer Motorbremse für eine aufgeladene Brennkraftmaschine zum Antrieb eines Kraftfahrzeuges, bei dem im Motorbremsbetrieb verdichtetes Arbeitsgas vor Beendigung des Expansionstaktes mindestens teilweise den Arbeitsräumen der Brennkraftmaschine über mindestens ein Drosselventil entzogen wird, wobei ein Abgasturbolader der Brennkraftmaschine eine Abgasturbine mit variabler Turbinengeometrie aufweist,
**dadurch gekennzeichnet,**
**daß** eine Motorbremsleistung über einen Regler (15) geregelt wird, der einen Hub (Hₓ) des Drosselventils und/oder einen Einströmquerschnitt (Aₓ) der Abgasturbine in Abhängigkeit von Betriebsparametern (n,p_{L},p_{E}) der Brennkraftmaschine und der Fahrgeschwindigkeit (v_{F}) des Kraftfahrzeuges regelt und daß über den Regler bei einem Signal einer Bremsleistungsanforderung des Fahrers die benötigte Bremsleistung (P_{Br}) zumindest vorzugsweise über die Motorbremse aufgebracht wird.

2. Verfahren nach Anspruch 1,
**dadurch gekennzeichnet,**
**daß** für maximale Motorbremsleistung die Werte für den Hub (Hₓ) des Drosselventils und/oder die Werte für den Einströmquerschnitt (Aₓ) in Abhängigkeit von vorgegebenen Betriebsparametern (n, p_{L}, p_{E}) der Brennkraftmaschine in einem elektronischen Kennfeld abgelegt sind und daß diese Werte in Abhängigkeit von aktuell gemessenen Betriebsparametern (n, p_{L}, p_{E}) ausgelesen werden können.

3. Verfahren nach Anspruch 1,
**dadurch gekennzeichnet,**
**daß** das Signal der Bremsleistungsanforderung ein Signal einer mechanischen Fußbremse ist.

4. Verfahren nach Anspruch 1 oder 2,
**dadurch gekennzeichnet,**
**daß** das Signal der Bremsleistungsanforderung ein Signal einer Handbremse oder eines Notknopfes ist und daß bei Anliegen dieses Signals am Regler (15) die hinsichtlich der maximalen Motorbremswirkung bei den herrschenden Betriebsparametern (n, p_{L}, p_{E}) der Brennkraftmaschine in einem Kennfeld abgelegten Werte für den Hub (Hₓ) des Drosselventils und den Einströmquerschnitt (Aₓ) der Abgasturbine angefahren werden.

5. Verfahren nach Anspruch 1,
**dadurch gekennzeichnet,**
**daß** Sollwerte des Drosselventilhubs (Hₓ) und des Einströmquerschnitts (Aₓ) der Abgasturbine sowie die aus diesen Sollwerten resultierenden Motorbremswerte für vorgegebene Betriebsparameter der Brennkraftmaschine und Fahrgeschwindigkeiten (v_{F}) in einem Kennfeld abgelegt sind und daß diese Sollwerte mit den im tatsächlichen Motorbremsbetrieb auftretenden Istwerten des Drosselventilhubs (Hₓ) und des Einströmquerschnitts (Aₓ) verglichen werden und daß bei einer vorgegebenen Abweichung der Istwerte von den Sollwerten ein Fehlersignal ausgegeben wird.

6. Verfahren nach Anspruch 1,
**dadurch gekennzeichnet,**
**daß** die Motorbremsleistung derart geregelt wird, daß bei einer geforderten Gesamtbremsleistung (p_{Br}) die über die Motorbremse (P_{Br,TB}) abgegebene Bremsleistung im wesentlichen der Gesamtbremsleistung entspricht und über die mechanischen Radbremsen (P_{Br,R})keine oder nur eine geringe Bremsleistung abgegeben wird.

7. Verfahren nach Anspruch 1,
**dadurch gekennzeichnet,**
**daß** durch Betätigung eines Motorbremsknopfes oder bei Erreichen einer vorgegebenen Temperatur im Abgastrakt das Drosselventil (8) lediglich für kleine Hübe (Hₓ) oder Nullhübe angesteuert wird, während das variable Leitgitter (13) für maximale Turbinenleistung angesteuert wird.

8. Verfahren nach Anspruch 7,
**dadurch gekennzeichnet,**
**daß** die Motordrehzahl (n) durch Anwahl einer niedrigeren Gangstufe erhöht wird.

9. Vorrichtung zur Durchführung eines Verfahrens zum Betreiben einer Motorbremse für eine aufgeladene Brennkraftmaschine zum Antrieb eines Kraftfahrzeuges, bei dem im Motorbremsbetrieb verdichtetes Arbeitsgas vor Beendigung des Expansionstaktes mindestens teilweise den Arbeitsräumen der Brennkraftmaschine über mindestens ein Drosselventil entzogen wird, wobei ein Abgasturbolader der Brennkraftmaschine eine Abgasturbine mit variabler Turbinengeometrie aufweist,
**dadurch gekennzeichnet,**
**daß** ein Hub (Hₓ) des Drosselventils (8) über einen Regler (15) nebst Steller (22) verstellbar ist, wobei besagter Regler (15) Betriebsparameter (P_{Br,TB}) der Brennkraftmaschine und Bremsleistungsanforderungen des Fahrers repräsentierende Eingangssignale erhält und in Signale für den Hub (Hₓ) des Drosselventils (8) verarbeitet.

10. Vorrichtung nach Anspruch 9,
**dadurch gekennzeichnet,**
**daß** zusätzlich zum Drosselventil (8) ein variables Leitgitter (13) einer Abgasturbine (10) des Abgasturboladers (2) über den Regler (15) nebst Steller (14) in seinem Durchströmquerschnitt und/oder seinem Drall verstellbar ist, wobei besagte Regler (15) Betriebsparameter der Brennkraftmaschine und Bremsleistungsanforderungen des Fahrers repräsentierende Eingangssignale erhält und in Signale für die Verstellung des Leitgitters (13) verarbeitet.

## Claims

1. Method of operating an engine brake for a turbocharged internal combustion engine for driving a motor vehicle, whereby, during engine brake operation, compressed working gas is drawn off, at least partially, from the working chambers of the internal combustion engine via at least one throttle valve prior to completion of the expansion stroke, wherein an exhaust gas turbo-charger of the internal combustion engine has an exhaust gas turbine with variable turbine geometry,
**characterised in that**
an engine braking power is controlled by means of a controller (15), which regulates a stroke (Hₓ) of the throttle valve and/or an inflow cross section (Aₓ) of the exhaust gas turbine depending on operating parameters (n, p_{L}, p_{E}) of the internal combustion engine and the driving speed (V_{F}) of the vehicle and, on detecting a signal of a demand for braking power on the part of the driver, applies the requisite braking power (P_{Br}) at least partially via the engine brake.

2. Method as claimed in claim 1,
**characterised in that**
the values for the stroke (Hₓ) of the throttle valve and/or the values for the inflow cross section (Aₓ) for maximum engine brake power depending on predetermined operating parameters (n, p_{L}, p_{E}) of the internal combustion engine are stored in an electronic characteristics map and these values may be read out depending on actual measured operating parameters (n, p_{L}, p_{E}).

3. Method as claimed in claim 1,
**characterised in that**
the signal of the brake power demand is a signal of a mechanical foot brake.

4. Method as claimed in claim 1 or 2,
**characterised in that**
the signal of the brake power demand is a signal of a hand brake or an emergency button and, when this signal is applied to the controller (15), the values for the stroke (Hₓ) of the throttle valve and the inflow cross section (Aₓ) of the exhaust gas turbine representing the maximum braking action at the prevailing operating parameters (n, p_{L}, p_{E}), stored in a characteristics map, are applied.

5. Method as claimed in claim 1,
**characterised in that**
desired values of the throttle valve stroke (Hₓ) and the inflow cross section (Aₓ) of the exhaust gas turbine as well as the engine brake values resulting from these desired values for predetermined operating parameters of the internal combustion engine and driving speeds (V_{F}) are stored in a characteristics map and these desired values are compared with the actual values of the throttle valve stroke (Hₓ) and the inflow cross section (Aₓ) occurring during actual engine brake operation and if the actual values differ from the desired values by a predetermined variance, a fault signal is issued.

6. Method as claimed in claim 1,
**characterised in that**
the engine brake power is regulated so that for a required overall braking power (P_{Br}), the braking power applied via the engine brake (P_{Br.TB}) essentially corresponds to the total power and no or very little braking power is applied via the mechanical wheel brakes (P_{Br.R}).

7. Method as claimed in claim 11,
**characterised in that**
when an engine brake button is operated or when a predetermined temperature is reached in the exhaust gas tract, the throttle valve (8) is activated for small strokes (Hₓ) or zero strokes only, whilst the variable deflector grating (13) is activated for maximum turbine power.

8. Method as claimed in claim 7,
**characterised in that**
the engine speed (n) is increased by selecting a lower gear stage.

9. System for implementing a method of operating an engine brake for a supercharged internal combustion engine for driving a motor vehicle, whereby during engine braking operation, compressed working gas is drawn off, at least partially, from the working chambers of the internal combustion engine via at least one throttle valve prior to completion of the expansion stroke, wherein an exhaust gas turbo-charger of the internal combustion engine has an exhaust gas turbine with variable turbine geometry,
**characterised in that**
a stroke (Hₓ) of the throttle valve (8) can be adjusted by means of a controller (15) and actuator (22) and said controller (15) receives input signals representing operating parameters (P_{Br.TB}) of the internal combustion engine and demands for brake power on the part of the driver, which it processes into signals for the stroke (Hₓ) of the throttle valve (8).

10. System as claimed in claim 9,
**characterised in that**
in addition to the throttle valve (8), a variable deflector grating (13) of an exhaust gas turbine (10) of the exhaust gas turbo-charger (2) can be controlled by means of the controller (15) and actuator (14) in terms of its flow diameter and/or its angular momentum, and said controller (15) receives input signals representing operating parameters (P_{Br.TB}) of the internal combustion engine and demands for brake power on the part of the driver, which it processes into signals for adjusting the deflector grating (13).

## Revendications

1. Procédé pour commander un frein moteur pour moteur à combustion interne suralimenté d'entraînement d'un véhicule, dans lequel les gaz comprimés en cours de marche sont évacués, au moins partiellement, des chambres de combustion du moteur avant la fin du cycle d'expansion, au moyen d'au moins une soupape d'étranglement, dans lequel une turbosoufflante à gaz d'échappement du moteur comporte une turbine à gaz d'échappement à géométrie variable,
**caractérisé en ce**
**qu'**une puissance de freinage du moteur est réglée au moyen d'un régulateur (15) réglant une course (Hₓ) de la soupape d'étranglement et/ou une section d'admission du flux (Ax) de la turbine à gaz d'échappement en fonction des paramètres d'exploitation (n, p_{L}, p_{E})) du moteur et de la vitesse de marche (v_{F}) du véhicule et que la puissance de freinage demandée (p₃ᵣ) est fournie, par l'intermédiaire du régulateur au moyen d'un signal de demande de freinage actionné par le conducteur, au moins de préférence, par le frein moteur.

2. Procédé selon la revendication 1,
**caractérisé en ce**
**que** pour la puissance de freinage moteur maxima, les valeurs de la course (Hₓ) de la soupape d'étranglement et/ou les valeurs de la section d'admission du flux (Ax), sont fixées conformément à des paramètres de fonctionnement prédéterminés (n, p_{L}, p_{E})) du moteur à combustion interne dans un champ caractéristique électromagnétique et que ces valeurs peuvent être choisies en relation avec les paramètres de marche (n, p_{L}, p_{E}) réellement mesurés.

3. Procédé selon la revendication 1,
**caractérisé en ce**
**que** le signal de demande de puissance de freinage est un signal de freinage mécanique au pied.

4. Procédé selon la revendication 1,
**caractérisé en ce**
**que** le signal de demande de puissance de freinage est un signal de freinage à main ou d'un arrêt d'urgence, et que, par action de ce signal sur le régulateur (15), seront mises en route les valeurs assignées, dans un champ caractéristique, à la course (Hₓ) de la soupape d'étranglement et à la section d'admission du flux (Ax) de la turbine à gaz d'échappement, en fonction de l'efficacité maximum de freinage moteur pour les paramètres de marche régnants (n, p_{L}, p_{E})) dans le moteur à combustion interne .

5. Procédé selon la revendication 1,
**caractérisé en ce**
**que** les valeurs de consigne de la course (Hₓ) et de la section d'admission du flux (Ax) de la turbine à gaz d'échappement ainsi que les valeurs du frein moteur correspondant à ces valeurs de consigne, sont définies pour des paramètres de marche prédéterminés du moteur et des vitesses de marche (Vy) dans un champ caractéristique et que ces valeurs de consigne sont comparées aux valeurs réelles de la course de la soupape d'étranglement (Hₓ) et de la section d'admission du flux (Aₓ) et qu'a partir d'une valeur prédéterminée de l'écart entre la valeur réelle et la valeur de consigne, est émis un signal de défaut.

6. Procédé selon la revendication 1,
**caractérisé en ce**
**que** la puissance de freinage moteur est réglée en sorte que pour une demande de puissance de freinage moteur globale (P_{3R}) la puissance de freinage fournie par le frein moteur (P_{Br}, _{TB}) correspond pour l'essentiel à la puissance de freinage totale et qu'aucune partie, ou qu'une faible partie seulement de la puissance de freinage est fournie par le freinage mécanique sur les roues. (P_{Br, R})

7. Procédé selon la revendication 1,
**caractérisé en ce**
**que** en actionnant un bouton de freinage du moteur, , ou au cas où une température déterminée serait atteinte dans le circuit des gaz d'échappement, la soupape d'étranglement (8) n'est commandée que pour des courses faibles ou nulles, tandis que la grille directrice variable (13) est commandée pour la puissance mAximale de la turbine.

8. Procédé selon la revendication 7,
**caractérisé en ce**
**que** la vitesse de rotation du moteur (n) s'accroît en sélectionnant un rapport de vitesses inférieur.

9. Dispositif de mise en oeuvre d'un procédé pour actionner un frein moteur d'un moteur à combustion interne suralimenté de traction pour véhicule dans lequel les gaz comprimés en cours de marche sont évacués du moteur avant la fin du cycle d'expansion par l'intermédiaire d'au moins une soupape d'étranglement, une turbosoufflante à gaz d'échappement du moteur comportant une turbine à gaz d'échappement à géométrie variable,
**caractérisé en ce que**,
la course (Hₓ) de la soupape d'étranglement (8) est réglable au moyen d'un régulateur (15) par l'intermédiaire d'un vérin (22) ledit régulateur (15) recevant les paramètres de marche (P_{Br}, _{TB}) du moteur et les signaux d'entraînement représentant les demandes de puissance de freinage du conducteur et les transforme en signaux pour la course (Hₓ) de la soupape d'étranglement (8).

10. Dispositif selon la revendication 9,
**caractérisé en ce,**
**qu'**en plus de la soupape d'étranglement (8), une grille directrice variable (13) d'une turbine à gaz d'échappement (10) de la turbosoufflante à gaz d'échappement (2) est mobile sous l'effet d'un régulateur (15) en plus d'un vérin (14), dans sa section de passage du courant et/ou dans sa rotation, ledit régulateur (15) recevant les signaux d'entrée représentant les paramètres de marche du moteur à combustion interne et les demandes de puissance de freinage du conducteur et les transformant en signaux commandant le déplacement de la grille directrice (13).
